Europäisches Patentamt

European Patent Office

Office européen des brevets

(11) Publication number: **0 022 441**
**B1**

# EUROPEAN PATENT SPECIFICATION

(45) Date of publication of patent specification: **06.11.85**

(51) Int. Cl.⁴: **B 65 G 1/133**

(21) Application number: **79301362.4**

(22) Date of filing: **11.07.79**

(54) Carousel automatic storage and retrieval system.

(43) Date of publication of application:
**21.01.81 Bulletin 81/03**

(45) Publication of the grant of the patent:
**06.11.85 Bulletin 85/45**

(84) Designated Contracting States:
**DE FR GB SE**

(56) References cited:
**FR-A-1 370 770**
**FR-A-1 427 294**
**FR-A-2 115 764**
**US-A-3 456 817**

(73) Proprietor: **S.P.S. Technologies Inc.**
**Newton, Pennsylvania 18940 (US)**

(72) Inventor: **Bernard, Clay**
**7794 S. Indianapolis**
**Tulsa, Oklahoma 74136 (US)**
Inventor: **Angell, William M**
**9704 S. Lakewood**
**Tulsa, Oklahoma 74136 (US)**
Inventor: **Matheny, William Forbes**
**1722 E. 56th Street**
**Tulsa, Oklahoma 74105 (US)**

(74) Representative: **MacGregor, Gordon**
**ERIC POTTER & CLARKSON 14 Oxford Street**
**Nottingham, NG1 5BP (GB)**

Courier Press, Leamington Spa, England.

EP 0 022 441 B1

## Description

This invention relates to a storage and retrieval apparatus for small parts and the like.

Systems of automatic storage and retrieval for inventory items to be used in warehouse applications are numerous. All storage and retrieval systems attempt to reduce the time taken in placing inventory items in storage and to reduce the time taken in retrieving the inventory items from storage when desired. Small parts frequently cannot be palletized and often must be stored in bins or containers because of their size or their delicate constructions.

Conventional storage and retrieval systems utilize solid storage shelves whereby an extractor or picking mechanism must go to the shelf to pick the desired inventory item. This limits the conventional system to essentially one transaction each time the extractor is operated.

A carousel type system having the features of the first part of claim 1 is known from French Patent Specification 2115764. This system uses a stationary elevator and a continuous storage arrangement comprising horizontally and vertically spaced compartments for storing articles, the whole arrangement being rotatable relative to the elevator, so that a selected column of compartments can be stopped adjacent the elevator. A carriage on the elevator is vertically reciprocable and has article withdrawal means comprising a gripping arm which is horizontally reciprocable for gripping an article and placing it in, or removing it from, a compartment.

This system cannot be used with articles of different shapes, because the gripping means has to be formed for gripping a particular article. Also, the system is not appropriate for delicate articles.

The present invention provides an automatic article storage and retrieval apparatus as defined in claim 1.

Delicate articles of various shapes and sizes can, therefore, be safely handled. The articles are carried in the containers and it is always these containers that are handled. The provision of an arm on a horizontal track permits the containers to be gently pushed into a compartment or pulled from a compartment and the horizontal platform supports the container as it is pushed or pulled. The horizontal platform also safely supports a selected container as the carriage is raised or lowered.

It is preferred that driven input rollers are provided at one side of the arm and its track and driven output rollers at the other side. The rollers carry containers to the carriage or from the carriage in directions parallel to the track and means is provided to move the containers from the input rollers to the horizontal platform and from the latter to the output rollers. This permits smooth and rapid removal of a container from the carriage whilst a further container is being fed to the carriage, without risk of damage to the container contents.

It is also preferred that the horizontal platform comprises freely rotatable rollers and that longitudinally movable conveyor means, such as chain conveyors, lie between the freely rotatable rollers and the driven input and output rollers, the conveyor means being raisable and lowerable between operative and inoperative positions. This permits particularly reliable, smooth and rapid transverse movement of the containers from the horizontal platform to the output rollers and from the input rollers to the platform.

Reference is made to the accompanying drawings wherein:—

Figure 1 is a plan view of a small parts storage and retrieval system constructed in accordance with one embodiment of the present invention showing a derrick aligned adjacent to two carousels;

Figure 2 is a top elevation view of a small parts storage and retrieval system shown in Figure 1;

Figure 3 is a perspective view of a carriage that would be within the derrick of the small parts storage and retrieval system shown in Figure 1;

Figure 4 is a plan view of the carriage shown in Figure 3 showing part of the carriage cut-away for clarity;

Figure 5 is a top elevation view of a small parts storage and retrieval system constructed in accordance with an alternative embodiment of the present invention;

Figure 6 is a top elevation view of a travelling arm with suction rings attached that would be located on the carriage shown in Figure 3; and

Figure 7 is a plan view of the travelling arm and suction rings shown in Figure 6.

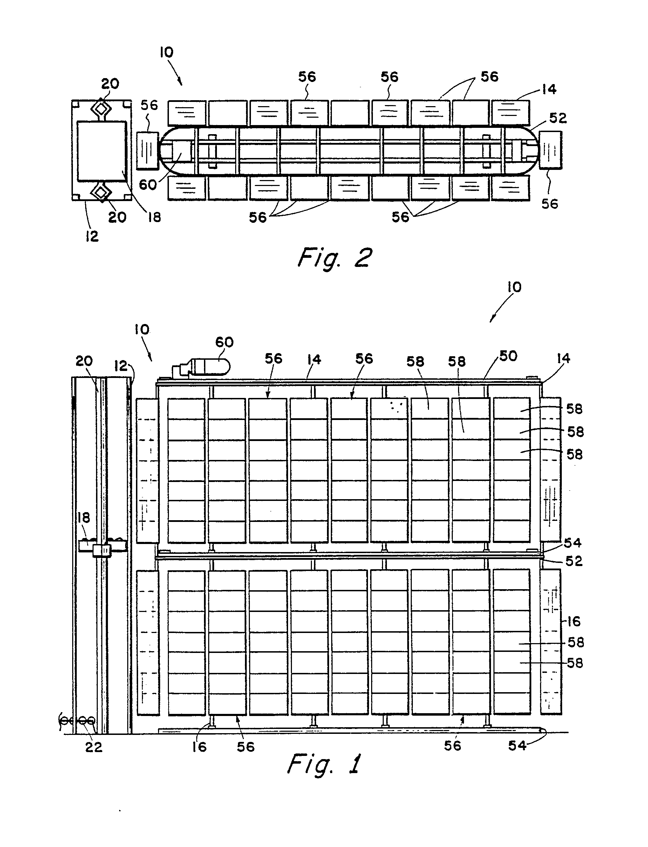

Referring to the drawings in detail, Figure 1 through 4 show a system 10 of automatic storage and retrieval for small parts and the like with remote operation. The small parts are stored in containers or tote bins. The system would be utilized for a multitude of different items, such as car parts, aircraft parts and computer parts and could be used in both retail and wholesale applications.

As best seen in Figure 1, a rigid, permanently mounted derrick 12 is designed for use with small parts storage carousels 14 and 16. A carriage 18 moves vertically inside the supporting derrick 12 and can accommodate two separate containers or tote bins simultaneously. The carriage 18 includes sets of rollers aligned in a horizontal plane. Two vertical poles 20 support the carriage and the carriage is slidably attached thereto. The carriage is moved vertically by an electric motor and weights attached to chain (not shown) would be used as a counter-balance. The feeding of the carriage 18 would be from a waist-high work station or, alternatively, a conveyor 22.

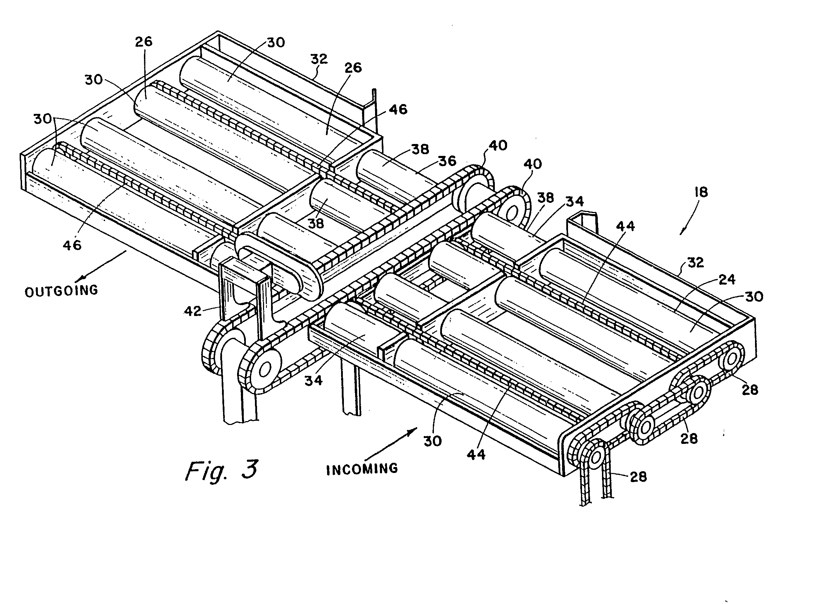

As best seen in Figure 3, two sets of roller shuttles 24 and 26 are attached to a chain drive 28 and remotely operated. Each set of roller shuttles includes a plurality of individual rollers 30. These two sets of roller shuttles would be fed by the work station or the conveyor 22 located near the base of the derrick. In one application of the invention, one shuttle 24 would be used for incoming tote bins while the other shuttle 26 would be used for outgoing tote bins. Guardrails 32 may surround part of the shuttles 24 and 26. Between the two shuttles 24 and 26, two small sets of free rollers 34 and 36 are aligned in the same horizontal plane. Each set of free rollers includes a plurality of individual rollers 38.

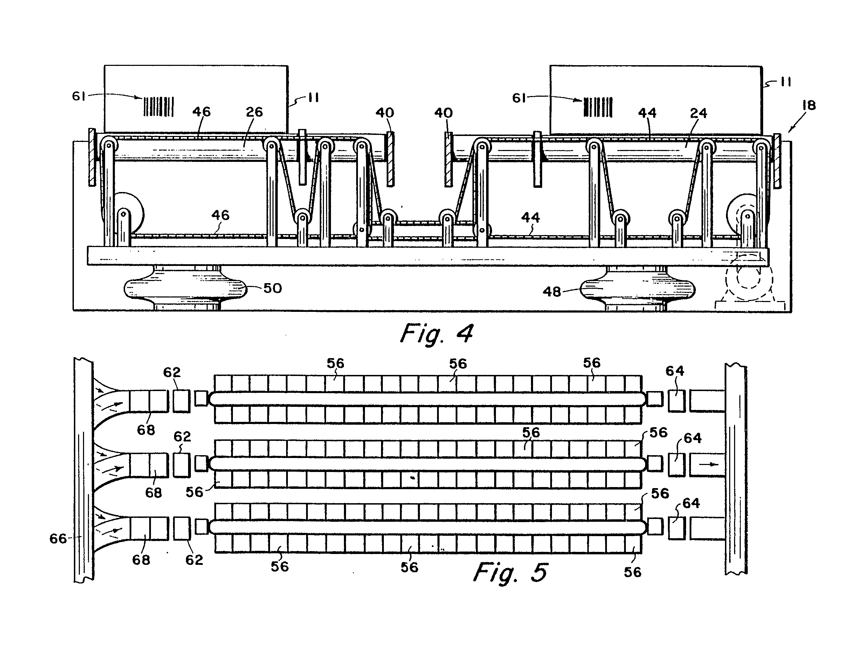

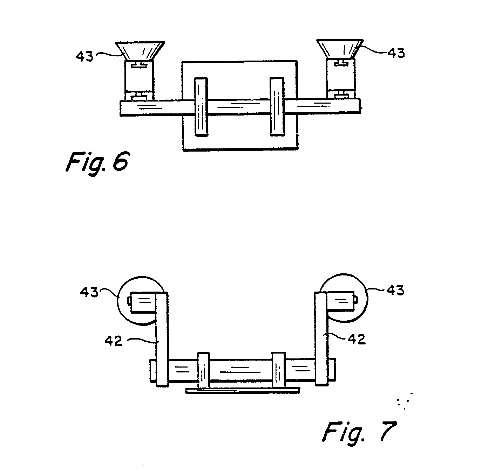

Between these sets of free rollers 34 and 36 is a pair of tracks 40 for a travelling arm 42. As seen in Figures 6 and 7, vacuum pump suction rings 43 are mounted on the travelling arm. The operation of the travelling arm 42 is remotely controlled. As will be seen, when contact between the travelling arm and the desired container or tote bin has been detected, a vacuum pump (not shown) connected to the rings 43 will be switched on. A tote bin that is positioned on the free-floating rollers 34 and 36 can be moved onto either of the roller shuttles 24 and 26 through sets of chain conveyors 44 and 46. When not in use, the chain conveyors are positioned slightly below the plane of the rollers on the carriage as best seen in Figure 4. Upon command, the chain conveyors 44 and 46 are raised slightly through use of inflatable rubber bladders 48 and 50 located beneath the conveyors.

The system includes at least one storage carousel however, in the preferred embodiment, the storage and retrieval system would include at least two independently operating carousels 14 and 16, mounted on above the other. It is important to note that two independently operating carousels aligned with a single derrick can greatly expedite the working of the system. One carousel could be moving to bring a desired bin to the derrick while the other carousel could be moving to bring another desired bin to the derrick. Thus, as will be seen, the system can accomplish two transactions with each vertical cycle of the carriage.

The structure of each carousel includes a top track 52 and a bottom track 54. The tracks for each carousel would be parallel and identical, oval in shape with rounded ends and parallel sides as can be seen in Figure 2. The derrick 12 is aligned adjacent to one of the rounded ends of the carousels.

Each carousel includes a series of compartmented baskets 56, that move along the oval tracks. The baskets 56 are parallel to each other and would be generally perpendicular to the carriage roller sets. The baskets would be lightweight in construction, consisting of wire caging for instance. When in storage, the tote bins 11 would rest in the various compartment levels 58 of the baskets. The tote bins when in storage might protrude slightly from the baskets. The baskets would be moved on the tracks by an electrically or hydraulically operated motor 60 located on the top track. The baskets in any one carousel would operate independently of the baskets in any other carousel.

The system is multi-faceted and can be made to perform a variety of work chores. The system may be used for "kitting" whereby a series of parts are delivered to a waist-high station to be assembled.

Under normal operating conditions, one tote bin will be taken from storage and another will be returned to storage during each vertical cycle of the carriage 18. The entire operation of the system is controlled from a remote digital keyboard operator's terminal (not shown). This computer terminal operates in conjunction with a remote laser scanner (not shown) which is capable of detecting bar codes 61 entered on the outside of the tote bins 11. The code number of the tote bin that is desired to be removed from storage is entered into the terminal. Upon receiving the appropriate command from the operator's terminal, the baskets 56 of one carousel will be moved around the carousel tracks until the appropriate basket is aligned facing the derrick 12. Meanwhile, the carriage will be moved up from the waist-high work station or conveyor 22. When the carriage has been elevated to the correct height, it will stop, and the travelling arm will move from its resting place until it comes in contact with the desired tote bin. The desired tote bin will be extracted using the vacuum pump suction rings 43 on the travelling arm 42. The computer memory in the operator's terminal remembers where each tote bin is in the system and will retrieve the desired coded bin upon command. Finally, the tote bin will be moved from the free rollers 34 and 36 to the outgoing shuttle 26 through use of the chain conveyor 46.

After a desired bin has been extracted, another tote bin that has been brought from the work station or conveyor to be placed in storage can be moved from the incoming roller shuttle 24 to the free rollers 34 and 36. The baskets 54 will be moved around the tracks and the carriage 18 will simultaneously move vertically in order to locate an empty compartment. The travelling arm 42 will then move the tote bin from the free rollers 34 and 36 into the empty compartment. The placement of tote bins in the compartment levels is randomly done. The computer memory will "remember" where the tote bin has been stored in the system.

An advantage of the present invention lies in the improved inventory control that is built into the system. The computer at all times retains an automatic record of the tote bins in the system.

If parts were stored in different size tote bins, the system could be programmed to deliver different size bins to different sized compartments in the baskets.

An alternative embodiment of the invention is shown in Figure 5. A first derrick 62, operating independently of a second derrick 64, would be positioned at the opposite rounded ends. The first derricks 62 could operate to insert bins into the carousels while the second derricks 64 could operate to extract desired bins from the carousels. Independent operation of the derricks 62 and 64 would further increase the speed capabilities of the invention.

The conveyor 66 that feeds the inserter derricks would have a queue area 68 which allows incoming tote bins to line up to be inserted in any particular carousel. This would prevent the conveyor system 66 that feeds the derricks 62 from being backed-up in the event that more than one tote bin is to be inserted in the same carousel.

**Claims**

1. An automatic article storage and retrieval apparatus which comprises a continuous article storage means (14) drivable along a horizontally continuous track (54), the storage means comprising horizontally and vertically arranged compartments (58), an elevator (12) adjacent the track and including a vertically reciprocably movable carriage (18), a horizontally movable article withdrawal means (42) on the carriage for placing articles in the storage means and removing articles therefrom, and control means for operating the article storage means, the elevator and the withdrawal means, characterised in that the apparatus further comprises containers (11) for holding the articles, the containers being received in the compartments (58); in that the carriage has a horizontal platform (34, 36) for supporting a container, the article withdrawal means comprises a horizontal track (40) and an arm (42) mounted on and located above the track (40), the arm being engageable with a selected container for transferring the selected container along the track (40) on to the horizontal platform (34, 36); and in that the article storage means (14) is horizontally moved to a selected position whilst the carriage is vertically moved to a selected position, both movements being under the control of the control means.

2. A storage and retrieval apparatus according to Claim 1, including input and output driven rollers (24, 26) provided on opposite sides of the horizontal track (40) for moving containers in a direction parallel to the horizontal track (40), and means (44, 46) for moving containers from the input rollers (24) to the horizontal platform (34, 36), which supports the containers during placement and withdrawal, and from said horizontal platform (34, 36) to the output rollers (26).

3. A storage and retrieval apparatus according to Claim 2, wherein the horizontal platform (34, 36) comprises freely rotatable rollers (38), which are axially parallel to the driven rollers (24, 26).

4. A storage and retrieval apparatus according to Claim 3, wherein said means for moving containers between the input and output rollers (24, 26) and the horizontal platform (34, 36) comprises conveyor means (44, 46) extending between the driven and freely rotatable rollers at each side of said horizontal track (40) and being longitudinally driven, and means (48, 50) for raising and lowering the conveyor means between operative and inoperative positions.

5. A storage and retrieval apparatus according to Claim 4, wherein the conveyor means (44, 46) comprises chain conveyors.

6. A storage and retrieval apparatus according to any preceding claim, wherein the track (40) comprises chains which carry the arm (42).

7. A storage and retrieval apparatus according to any preceding claim, wherein the arm (42) carries suction means (43) for engaging a selected container.

8. A storage and retrieval apparatus according to any preceding claim, comprising a pair of said article storage means (14, 16) arranged one above the other in peripheral registry and being independently drivable.

**Revendications**

1. Appareil de stockage et de retrait automatique d'articles, comprenant des moyens de stockage d'articles en continu (14) pouvant être entraînés le long d'une piste horizontale et continue (54), les moyens de stockage présentant des compartiments (58) disposés horizontalement en verticalement, un élévateur (12) adjacent à la piste et comprenant un chariot (18) mobile verticalement avec un mouvement de va-et-vient des moyens de retrait d'articles (42) mobiles horizontalement sur le chariot pour placer des articles dans les moyens de stockage et en retirer les articles, et des moyens de commande pour actionner les moyens de stockage d'articles, l'élévateur et les moyens de retrait, caractérisé par le fait que l'appareil comprend en outre des récipients (11) pour contenir les articles, les récipients étant reçus dans les compartiments (58); que le chariot comprend une plate-forme horizontale (34, 36) pour supporter un récipient, les moyens de retrait d'articles comprennent une piste horizontale (40) et un bras (42) monté sur et disposé au-dessus de la piste (40), le bras pouvant venir coopérer avec un récipient choisi pour transférer ce récipient choisi le long de la piste (40) et sur la plate-forme horizontale (34, 36); et que les moyens de stockage d'articles (14) sont déplacés horizontalement vers une position choisie pendant que le chariot est déplacé verticalement vers une position choisie, les deux mouvements étant soumis à la commande des moyens de commande.

2. Appareil de stockage et de retrait selon la revendication 1, comprenant des rouleaux d'entrée et de des rouleaux d'entrée et de sortie entraînés (24, 26) prévus sur les côtés opposés de la piste horizontale (40) pour déplacer les récipients dans une direction parallèle à la piste horizontale (40) et des moyens (44, 46) pour déplacer les récipients des rouleaux d'entrée (24) vers la plate-forme horizontale (34, 36) qui supporte les récipients pendant leur mise en place et leur retrait, et de ladite plate-forme horizontale (34, 36) vers les rouleaux de sortie (26).

3. Appareil de stockage et de retrait selon la revendication 2, dans lequel la plate-forme horizontale (34, 36) comprend des rouleaux (38) à rotation libre, qui sont parallèles axialement aux rouleaux entraînés (24, 26).

4. Appareil de stockage et de retrait selon la revendication 3, dans lequel lesdits moyens pour déplacer les récipients entre les rouleaux d'entrée et de sortie (24, 26) et la plate-forme horizontale (34, 36) comprennent des moyens transporteurs (44, 46) qui s'étendent entre les rouleaux entraînés et les rouleaux à rotation libre sur chaque côté de ladite piste horizontale (40) et sont entraînés longitudinalement, et des moyens (48, 50) pour soulever et abaisser les moyens transporteurs entre leur position de travail et leur position de repos.

5. Appareil de stockage et de retrait selon la revendication 4, dans lequel les moyens transporteurs (44, 46) comprennent des convoyeurs à chaînes.

6. Appareil de stockage et de retrait selon l'une quelconque des revendications précédentes, dans lequel la piste (40) comprend des chaînes supportant le bras (42).

7. Appareil de stockage et de retrait selon l'une quelconque des revendications précédentes, dans lequel le bras (42) supporte des moyens d'aspiration (43) pour saisir un récipient choisi.

8. Appareil de stockage et de retrait selon l'une quelconque des revendications précédentes, comprenant une paire desdits moyens de stockage d'articles (14, 16) disposés l'un au-dessus de l'autre en coïncidence périphérique et pouvant être entraînés indépendamment.

**Patentansprüche**

1. Vorrichtung für die automatische Einlagerung und Ausgabe von Gegenständen mit einer entlang einer horizontal fortlaufenden Fahrspur (54) verfahrbaren Einrichtung (14) für die Aufnahme der Gegenstände, welche waagerecht und senkrecht angeordnete Abteilungen (58) aufweist, einem zunächst der Fahrspur angeordneten Hubförderer (12), welcher einen senkrecht auf und ab bewegbaren Schlitten (18) aufweist, einer auf dem Schlitten angeordneten, waagerecht bewegbaren Übergabeeinrichtung (42) für die Gegenstände zum Eintragen von Gegenständen in die Aufnahmeeinrichtung und für die Entnahme von Gegenständen daraus, und mit Steuereinrichtungen für die Steuerung der Aufnahmeeinrichtung, des Hubförderers und der Übergabeeinrichtung, dadurch gekennzeichnet, daß die Vorrichtung ferner Behälter (11) für die Aufbewahrung der Gegenstände aufweist, welche in den Abteilungen (58) Aufnahme finden, daß der Schlitten eine waagerechte Plattform (34, 36) als Auflage für einen Behälter hat, daß die Übergabeeinrichtung eine waagerechte Fahrspur (40) und einen auf der Fahrspur gelagerten und darüber angeordneten Arm (42) aufweist, wobei der Arm an einem ausgewählten Behälter in Angriff bringbar ist, um den ausgewählten Behälter entlang der Fahrspur (40) auf die waagerechte Plattform (34, 36) zu überführen, und daß die Aufnahmeeinrichtung (14) für die Gegenstände waagerecht in eine ausgewählte Stellung bewegt wird, während der Schlitten senkrecht in eine ausgewählte Stellung bewegt wird, wobei beide Bewegungen unter Steuerung durch die Steuereinrichtung erfolgen.

2. Einlagerungs- und Ausgabevorrichtung nach Anspruch 1, mit an gegenüberliegenden Seiten der waagerechten Fahrspur (40) vorgesehenen, angetriebenen Eintrags- und Austragsrollen (24, 26) zum Bewegen von Behältern in einer zur waagerechten Fahrspur (40) parallelen Richtung und Einrichtungen (44, 46) zum Bewegen von Behältern von den Eintragsrollen (24) zur waagerechten Plattform (34, 36), welche die Behälter während der Einlagerung und Ausgabe trägt, und von der waagerechten Plattform (34, 36) zu den Austragsrollen (26).

3. Einlagerungs- und Ausgabevorrichtung nach Anspruch 2, bei welcher die waagerechte Plattform (34, 36) frei drehbare Rollen (38) aufweist, welche achsparallel zu den angetriebenen Rollen (24, 26) angeordnet sind.

4. Einlagerungs- und Ausgabevorrichtung nach Anspruch 3, bei welcher die Einrichtungen zum Bewegen von Behältern zwischen den Eintrags- und Austragsrollen (24, 26) und der waagerechten Plattform (34, 36) eine sich an jeder Seite der waagerechten Fahrspur zwischen den angetriebenen und den frei drehbaren Rollen erstreckende, in Längsrichtung angetriebene Fördereinrichtung (44, 46) und eine Einrichtung (48, 50) zum Heben und Senken der Fördereinrichtung zwischen Betriebs- und Außerbetriebsstellungen aufweisen.

5. Einlagerungs- und Ausgabevorrichtung nach Anspruch 4, bei welcher die Fördereinrichtung (44, 46) Förderketten aufweist.

6. Einlagerungs- und Ausgabevorrichtung nach einem der vorstehenden Ansprüche, bei welcher die Fahrspur (40) den Arm (42) tragende Ketten aufweist.

7. Einlagerungs- und Ausgabevorrichtung nach einem der vorstehenden Ansprüche, bei welcher der Arm (42) Saugeinrichtungen (43) für den Angriff an einem ausgewählten Behälter trägt.

8. Einlagerungs- und Ausgabevorrichtung nach einem der vorstehenden Ansprüche, mit einem Paar von Aufnahmeeinrichtungen (14, 16), welche mit ihren Umfängen miteinander fluchtend übereinander angeordnet und unabhängig antreibbar sind.

Fig. 2

Fig. 1

Fig. 3

*Fig. 4*

*Fig. 5*

Fig. 6

Fig. 7